# EUROPEAN PATENT APPLICATION

(11) **EP 4 592 365 A1**
(43) Date of publication of application: **30.07.2025**
(21) Application number: 23868463.3
(22) Date of filing: 07.09.2023
(51) Int. Cl.: C09D 7/63, C09D 127/06, C09D 175/04, C09D 7/61, C09D 7/40, C09D 5/00, C08K 5/00, C08K 3/36, C08K 5/10, C08J 9/04

(54) **COATING FILM COMPOSITION HAVING HEAT INSULATION AND COATED METAL PLATE USING SAME**

(30) Priority: 22.09.2022 KR 20220119711
(71) Applicant: POSCO Co., Ltd, Pohang-si, Gyeongsangbuk-do 37859 (KR)
(72) Inventor: KIM, Jin-Tae, Gwangyang-si, Jeollanam-do 57807 (KR); LEE, Jung-Hwan, Gwangyang-si, Jeollanam-do 57807 (KR); CHOI, Yang-Ho, Gwangyang-si, Jeollanam-do 57807 (KR)
(74) Representative: Meissner Bolte Partnerschaft mbB
(86) International application number: PCT/KR2023/013399
(87) International publication number: WO 2024/063409

(57) **Abstract**

The present invention provides a coating film composition and a coated metal plate using same, the coating film composition comprising: a polymer resin; foaming capsules; a plasticizer; and silica, wherein the coating film composition comprises, with respect to 100 parts by weight of the polymer resin, 0.1-10 parts by weight of the foaming capsules; 5-40 parts by weight of the plasticizer; and 1-10 parts by weight of the silica, the foaming capsules are in the form of foaming capsules containing a foaming agent in a thermoplastic plastic cell structure, and the weight ratio of the foaming capsules to the silica is 1:1-1: 10.

## Description

### Technical Field

The present disclosure relates to a coating film composition having heat insulation by closed pores formed by foaming, and a steel plate for preventing dew condensation, having heat insulation, used as an exterior panel of a home appliance, a roofing material, a wall, or the like, of a house or a factory building, etc., in the manner of those formed by applying the coating film composition to a base metal plate.

### Background Art

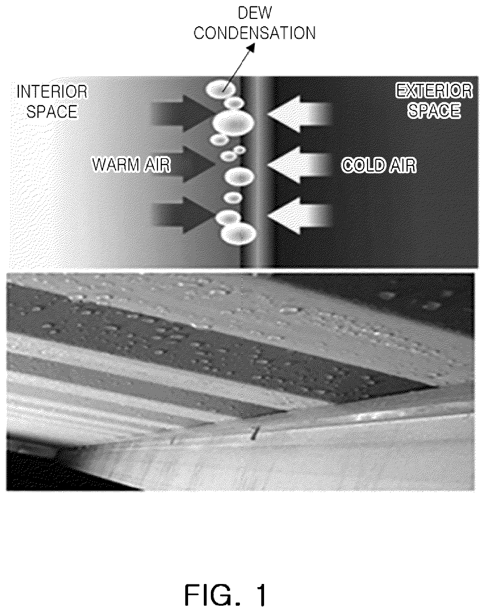

As illustrated in FIG. 1, dew condensation refers to a phenomenon in which water droplets are formed on one surface of a home appliance, in which a difference in temperature between interior and exterior spaces is high, such as a refrigerator, an air conditioner, or the like, or when a high difference in temperatures between an inside and an outside of a building is present in winter, on a surface of an interior wall in an interior space, facing an exterior space, and on an inner surface of a structure such as a roofing material.

When dew condensation occurs in a home appliance, a building, or a structure, mold may grow on a surface of a wall, corresponding thereto, or a phenomenon such as freezing or the like may occur, thereby causing damage to a structure of the building. In a structure such as a roofing material of a building for producing a product, water droplets formed by dew condensation may fall into an interior space of the building, thereby causing damage to the product or the like.

Accordingly, it is necessary to prevent dew condensation in order to maintain a comfortable living space at all times, minimize energy loss, and prevent interior and exterior materials of a building from decaying or being damaged by moisture, or loss of the product production process.

Generally, a roofing material such as a stone material, a wood material, or the like, having high heat insulation, may be used as a roof and a wall of a building, but a steel plate may be used for a roofing material of a factory, a livestock shed, a temporary barracks, or the like because of their ease and rapidity of construction and maintenance. Since the steel plate frequently causes dew condensation and heat loss due to high thermal conductivity of metal, additional insulation treatment is required.

Conventionally, dew condensation has been prevented in various manners. Thereamong, provided are a method of using an adhesive to bond an insulating material, such as polyethylene, to a sponge having a thickness of 4 to 6 mm, to a steel plate. However, this method had problems in practical use due to limitations of the adhesive and a complex process.

There may also be a case in which porous inorganic particles or glass beads are added to a polymer resin solution to create a pore effect and to express an effect of preventing dew condensation. However, in this case, in a continuous production method such as of steel, when a manufactured steel plate was wound in a coil shape, the glass beads be broken due to heavy load of the steel plate, and insulation and anti-dew condensation effects may not be obtained. In addition, a phenomenon in which hardness of a coating film increased due to addition of excessive amounts of the inorganic particles or the glass beads, and the coating film was broken during press processing or bending processing may occur.

### [Prior Art Document]

### [Patent Document]

(Patent Document 1) Japanese Patent Publication No. 2001-270031

### Summary of Invention

### Technical Problem

To solve the above problem, an aspect of the present disclosure is to provide a coating film composition having heat insulation by including a foaming agent having a capsule shape and closed pores formed by foaming of the foaming agent.

Another aspect of the present disclosure is to provide a coated metal plate coated with the coating film composition having heat insulation as described above.

### Solution to Problem

According to an aspect of the present disclosure, a coating film composition including a polymer resin; a foaming capsule; a plasticizer; and silica, wherein the coating film composition includes 0.1 to 10 parts by weight of the foaming capsule; 5 to 40 parts by weight of the plasticizer; and 1 to 10 parts by weight of the silica, based on 100 parts by weight of the polymer resin, wherein, in the foaming capsule, a foaming agent is included in a thermoplastic plastic cell structure, and a weight ratio between the foaming capsule and the silica is 1:1 to 1:10, is provided.

According to another embodiment of the present disclosure, a coated metal plate including a base metal plate; and an anti-dew condensation layer on at least one surface of the base metal plate, wherein the anti-dew condensation layer includes a porous coating layer and a pretreatment layer disposed between the base metal plate and the porous coating layer, and wherein the porous coating layer includes the coating film composition, and closed pores, is provided.

### Advantageous Effects of Invention

Since a coated film formed by a coating film composition of the present disclosure includes closed pores formed by foaming a foaming agent included in a foaming capsule, not only an effect of minimizing a difference in temperature between exterior and interior spaces to prevent dew condensation, but also an insulating effect of blocking external heat or cold air and conversely preventing internal heat and cold air from escaping externally may be provided, thereby providing an effect of saving energy.

In addition, an anti-dew condensation layer including a coating film composition according to the present disclosure may have high emissivity and strength, and, at the same time, may have corrosion resistance that prevents a base metal plate from corroding.

### Brief Description of Drawings

FIG. 1 schematically illustrates a principle in which a dew condensation phenomenon is generated.
FIG. 2 is a cross-sectional view schematically illustrating a cross-section of a coated metal plate coated with a coating film composition of the present disclosure.
FIG. 3 schematically illustrates a principle of a coated metal plate coated with a coating film composition of the present disclosure, exhibiting an insulating effect.
FIG. 4 schematically illustrates a method for evaluating a dew condensation phenomenon prevention effect of a coating film composition of the present disclosure.

### Best Mode for Invention

Hereinafter, preferred embodiments of the present disclosure will be described with reference to the attached drawings. However, the embodiments of the present disclosure may be modified in various other forms, and the scope of the present disclosure is not limited to embodiments described below.

According to an embodiment of the present disclosure, a coating film composition including a polymer resin; a foaming capsule; a plasticizer; and silica may be provided. A coated film formed by the coating film composition may form closed pores by foaming a foaming agent included in the foaming capsule.

A coating film composition according to an embodiment of the present disclosure may include 0.1 to 10 parts by weight of the foaming capsule; 5 to 40 parts by weight of the plasticizer; and 1 to 10 parts by weight of the silica, based on 100 parts by weight of the polymer resin.

More specifically, the coating film composition of the present disclosure may include 0.1 to 5 parts by weight of the foaming capsule; 10 to 30 parts by weight of the plasticizer; and 1 to 10 parts by weight of the silica, based on 100 parts by weight of the polymer resin.

The foaming capsule may be in a form of a foaming capsule in which the foaming agent is included in a thermoplastic plastic cell structure, and a weight ratio between the foaming capsule and the silica may be 1:1 to 1:10.

More specifically, the weight ratio between the foaming capsule and the silica may be 1:2 to 1:10.

More specifically, the weight ratio between the foaming capsule and the silica may be 1:2 to 1:5.

Hereinafter, each component of the coating film composition of the present disclosure will be described in more detail.

### <Polymer Resin>

As a polymer resin included in a coating film composition according to an embodiment of the present disclosure, a polyvinyl chloride resin capable of forming a thick coated film with a liquid coating solution may be used.

The polymer resin may be the polyvinyl chloride resin having a molecular weight of 3,000 to 6,000. When the polymer resin has a molecular weight of less than 3,000, weather resistance of a coating layer may be reduced, and when the molecular weight exceeds 6,000, viscosity may rapidly increase, thereby reducing coating processability. In addition to the polyvinyl chloride resin, the polymer resin may also be a polyurethane resin, but is not limited thereto.

### <Plasticizer>

A coating film composition according to an embodiment of the present disclosure may include a plasticizer to control viscosity and processability of the polymer resin formed of polyvinyl chloride.

The plasticizer used in the polyvinyl chloride resin may be at least one selected from the group consisting of bis-2-propylheptyl phthalate (DPHP), bis-2-ethylhexyl adipate (DEHA), dimethyl adipate (DMAD), monomethyl adipate (MMAD), dioctyl adipate (DOA), dibutyl sebacate (DBS), dibutyl maleate (DBM), diisobutyl maleate (DIBM), and trimethyl tentanyl diisobutyrate.

The plasticizer may be included in an amount of 5 to 40 parts by weight, based on 100 parts by weight of the polymer resin, and more preferably, may be included in an amount of 10 to 30 parts by weight. When an amount of the plasticizer is less than 5 parts by weight, viscosity of the polyvinyl chloride solution may be too high, which may result in poor processability, while when an amount of the plasticizer exceeds 40 parts by weight, viscosity may be too low or a coated film may become too loose, making it difficult to maintain as a coated film of a steel plate for preventing dew condensation.

### <Foaming Capsule and Silica>

A coating film composition according to an embodiment of the present disclosure may include a foaming capsule. The foaming capsule may be a foaming capsule in which a foaming agent is included in a thermoplastic plastic cell structure.

A thermoplastic plastic forming a plastic cell structure outside the foaming capsule may be an acrylonitrile copolymer-based plastic, more specifically, a styrene-acrylonitrile copolymer, but is not limited thereto.

As the foaming agent included in the foaming capsule, azodicarbonamide (ADCA), p,p'-oxybisbenzenesulfonylhydrazide (OBSH), hydrazodicarbonamide (HDCA), dinitrosopentamethylenetetramine (DPT), or the like may be used, and preferably, an azodicarbonamide (ADCA)-based foaming agent may be used, but is not limited thereto.

It is preferable that the foaming capsule may withstand a load of at least 200 kg/cm² after a foaming process. When a load of 200 kg/cm² is not withstood, closed pores may not withstand a load of a steel plate after a coated film is manufactured, and the pores may be destroyed, which may weaken insulation performance.

An average particle diameter of the foaming capsule may be 1 to 20 µm. When the average particle diameter of the foaming capsule is less than 1 µm, sizes of the closed pores after foaming may be too small, making it difficult to obtain an insulation effect, while, when the average particle diameter of the foaming capsule exceeds 20 µm, sizes of the closed pores after foaming may be too large, resulting in a problem of decreasing strength of the coated film to deteriorate properties of the coated film during processing.

In a coating film composition according to an embodiment of the present disclosure, the foaming capsule may be included in an amount of 0.1 to 10 parts by weight, more preferably 0.1 to 5 parts by weight, and even more preferably 1 to 5 parts by weight, based on 100 parts by weight of the polymer resin. When the foaming capsule is included in an amount less than 0.1 parts by weight, formation of closed pores by foaming may be insufficient, which may weaken insulation performance. When the foaming capsule is included in an amount exceeding 10 parts by weight, viscosity of a solution may increase during preparation of the solution, making it difficult to perform a coating process.

In addition, a coating film composition according to an embodiment of the present disclosure may include silica to improve strength and emissivity of the coated film, and the silica may be in a form of silica powder. In addition to silica, at least one of calcium carbonate (CaCO₃), titanium dioxide (TiO₂), and magnesium hydroxide (Mg(OH)₂) may be additionally used.

An average particle diameter of the silica powder may be 10 to 25 µm. When the average particle diameter of the silica is less than 10 µm, an excessive amount of the silica may be added to achieve a desired degree of gloss, which may increase viscosity or cause a problem of increasing costs, and when the average particle diameter exceeds 25 µm, a surface of the coated film may become too rough.

In a coating film composition according to an embodiment of the present disclosure, the silica may be included in an amount of 1 to 10 parts by weight based on 100 parts by weight of the polymer resin. When the silica is included in an amount less than 1 part by weight, an effect may not be effected on improving emissivity and strength of the coated film, and when the silica is included in an amount exceeding 10 parts by weight, brittleness of the coated film may increase, making processability vulnerable and inhibiting foamability of the coated film.

In the coating film composition of the present disclosure, the foaming capsule and the silica may be included in a weight ratio of 1:1 to 1:10, but may be included in a weight ratio of 1:2 to 1:10, more preferably in a weight ratio of 1:2 to 1:8, and even more preferably in a weight ratio of 1:2 to 1:5.

When the weight ratio of the silica to the foaming capsule is less than 1:1, there may be an advantage of relatively efficient foaming, but it may be difficult to expect an improvement in emissivity due to an insufficient amount of the silica, and hardness of the coated film may become weak. When the weight ratio exceeds 1:10, hardness of the coated film may become too high due to an excessive amount of the silica, which may increase brittleness of the coated film, making processability weak, and may also limit formation of closed pores.

### <Additive>

A coating film composition according to an embodiment of the present disclosure may include an additive. Specific materials included in the additive and amounts thereof may be generally known in this technical field, and may be appropriately selected and used by a technician when manufacturing a paint, and a type and an amount of the additive are not particularly limited.

For example, the additive may include one or more of a pigment, an anti-foaming agent, a leveling agent, a dispersant, a flame retardant, and an ultraviolet stabilizer, and may be added in an amount of 1.0 to 10 parts by weight based on 100 parts by weight of the polymer resin, as necessary.

In a coating film composition according to an embodiment of the present disclosure, a pigment having a unique color for aesthetics may be used as the additive, and the pigment may be implement to have various colors by mixing a black pigment, a red pigment, a yellow pigment, or a white pigment in a predetermined mixing ratio.

Examples of the black pigment include a carbon black, a carbon nanotube, graphite, and graphene, and may include at least one selected from the group consisting of iron oxide (Fe₂O₃), titanium dioxide (TiO₂), a carbon black, a carbon nanotube, graphite, and graphene. An example of the red pigment may include iron oxide (Fe₂O₃). An example of the white pigment may include titanium dioxide (TiO₂). An example of the yellow pigment may include strontium chromate.

The coating film composition of the present disclosure may include a solvent for viscosity control. The solvent may be, for example, one or more solvents selected from the group consisting of toluene, xylene, isopropanol, solvent naphtha, cellosolve, cellosolve acetate, and butyl cellosolve. The solvent may be used alone or as a mixture of two or more. An amount of the solvent added to the composition may be appropriately adjusted, as needed, to control viscosity of the coating film composition, and is not particularly limited herein.

### <Coated Metal Plate>

According to another embodiment of the present disclosure, a coated metal plate including a base metal plate; and an anti-dew condensation layer having thermal heat insulation on at least one surface of the base metal plate may be provided. The anti-dew condensation layer may include a porous coating layer and a pretreatment layer between the base metal plate and the porous coating layer. The porous coating layer may be formed from a coated film coated with a coating film composition of the present disclosure, and may include closed pores formed by foaming a foaming agent included in a foaming capsule of the coating film composition of the present disclosure.

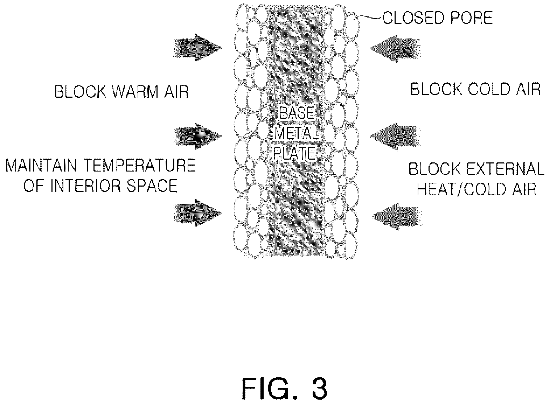

Since a coated metal plate according to an embodiment of the present disclosure may include the porous coating layer in which closed pores are formed by the coating film composition of the present disclosure, and, thus, as illustrated in FIG. 3, not only an effect of minimizing a difference in temperature between exterior and interior spaces to prevent dew condensation, but also an insulating effect of blocking external heat or cold air and conversely preventing internal heat and cold air from escaping externally may be provided, thereby providing an effect of saving energy. In addition, the coated metal plate according to the present disclosure may have excellent corrosion resistance, along with high emissivity and strength, by the anti-dew condensation layer including the porous coating layer formed on at least one surface of the base metal plate.

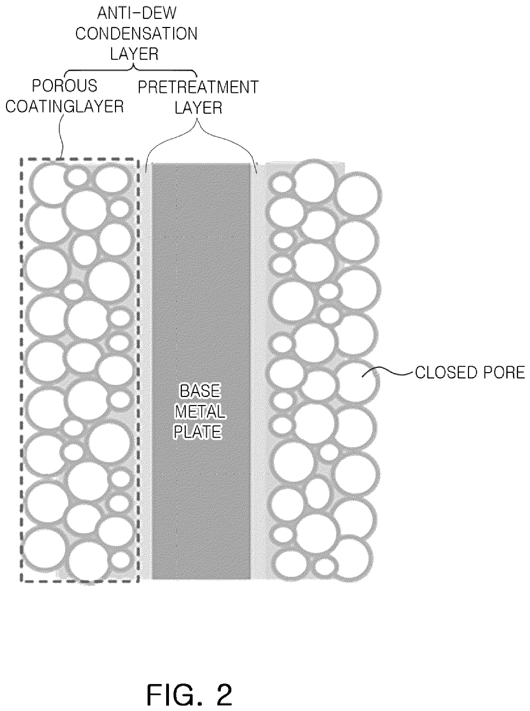

Hereinafter, a coated metal plate according to an embodiment of the present disclosure will be described in more detail with reference to FIG. 2.

A coated metal plate according to an embodiment of the present disclosure may include a base metal plate and an anti-dew condensation layer formed on one or both surfaces of the base metal plate.

The coated metal plate may be manufactured by applying a composition for forming the pretreatment layer on the base metal plate, drying the same, and then applying the coating film composition thereon. In this case, formation of pores by foaming of a foaming capsule may be accomplished by coating the coating film composition, and then drying and curing the same. The foaming, drying, and curing may be accomplished simultaneously.

The base metal plate may be one selected from the group consisting of a cold-rolled steel plate, a hot-rolled steel plate, a galvanized steel plate, a zinc alloy-plated steel plate, an aluminum plate, and a stainless steel plate, but is not limited thereto.

A thickness of the base metal plate may be 0.25 mm to 4.5 mm, but is not limited thereto.

The anti-dew condensation layer may include a porous coating layer including the coating film composition of the present disclosure, and a pretreatment layer formed between the base metal plate and the porous coating layer to enhance corrosion resistance of the base metal plate and coating adhesion between the base metal plate and the porous coating layer.

As a composition for forming the pretreatment layer, an acrylic resin, an epoxy resin, a phenol resin, a xylene resin, a polyester resin, a urethane resin, or the like may be used, and preferably, an acrylic-based resin may be used. As the acrylic-based resin, urethane acrylate, epoxy acrylate, or the like may be used, but are not limited thereto.

A thickness of the pretreatment layer may be 0.1 to 1 µm. When the thickness of the pretreatment layer is less than 0.1 µm, adhesion with the porous coating layer coated on the pretreatment layer may be insufficient, and when the thickness of the pretreatment layer exceeds 1 µm, an excessive amount of a resin composition may be required for treatment of the pretreatment layer, which may be uneconomical.

A thickness of the porous coating layer may be 50 to 400 µm. When the thickness of the porous coating layer is less than 50 µm, insulation, dew condensation prevention, and energy saving effects may be weakened, and, when the thickness of the porous coating layer exceeds 400 µm, the excessive thickness of the coating layer may make it difficult to form and process the coated metal plate, and excessive costs may be required for production, which may be uneconomical.

The closed pores may have an average particle diameter of 5 to 50 µm. When the average particle diameter of the closed pores is less than 5 µm, sizes of the pores may be too small to obtain an insulation effect of the pores, and when the average particle diameter of the closed pores exceeds 50 µm, sizes of the pores in the coating film may be too large, resulting in a problem of decreasing strength of the coated film to deteriorate properties of the coated film during processing.

The porous coating layer may include closed pores formed by applying and foaming a coating film composition according to an embodiment of the present disclosure.

More specifically, a coating film composition according to an embodiment of the present disclosure may be applied to the base metal plate, and may be dried and cured under conditions of 185 to 240°C, and the closed pores may be formed by foaming the foaming capsules included in the coating film composition of the present disclosure, when drying and curing are performed.

When temperatures of the drying and curing are lower than 185°C, a degree of foaming may be weak, such that the average particle diameter of the closed pores becomes small, and therefore, it may be difficult to obtain an insulation effect of the pores. When temperatures of the drying and curing exceed 240°C, the average particle diameter of the closed pores may exceed 50 µm or the foaming capsules may be destroyed, causing the pores to open.

To manufacture a coated metal plate according to an embodiment of the present disclosure, a conventionally known method may be applied as a method of applying a coating film composition of the present disclosure and/or a composition for forming a pretreatment layer to a base metal plate. For example, flow coating, roll coating, curtain coating, knife coating, spin coating, bar coating, or the like may be used. Additionally, spraying, airless spraying, air spraying, brushing, or the like may be used. These application methods may be automated or applied manually.

### Mode for Invention

### <Example>

Hereinafter, Inventive Example and Comparative Example of the present disclosure will be described. However, Inventive Example of the present disclosure may be modified into various other forms, and the scope of the present disclosure is not limited to Inventive Example described below.

### 1. Manufacturing of Coated Metal Plate

### Inventive Example 1

100 g of a polyvinyl chloride resin as a polymer resin; 20 g of bis-2-propylheptyl phthalate (DPHP) as a plasticizer; 1 g of a foaming capsule; 5 g of silica, and 5 g of a pigment (titanium dioxide, TiO₂) and 10 g of a solvent (solvent naphtha) as additives were added, and stirred to manufacture a coating film composition.

As the foaming capsule, a foaming capsule having an average particle diameter of 10 to 15 µm containing an azodicarbonamide foaming agent in an outer shell formed of a styrene-acrylonitrile copolymer was used.

A galvanized steel plate having a size of 20 x 20 cm was prepared, and a urethane acrylate solution was applied to the galvanized steel plate to have a thickness of 1 µm, and then cured at 150°C to form a pretreatment layer.

To form a porous coating layer on the pretreatment layer, the manufactured coating film composition was applied to have a thickness of 50 µm by a bar coating method, and dried at 224°C for 30 seconds to manufacture a coated metal plate.

### Inventive Example 2

A coated metal plate was manufactured in the same manner as in Inventive Example 1, except that a coating film composition was applied in a thickness of 100 µm.

### Inventive Example 3

A coated metal plate was manufactured in the same manner as in Inventive Example 1, except that a coating film composition was applied in a thickness of 200 µm.

### Inventive Example 4

A coated metal plate was manufactured in the same manner as in Inventive Example 1, except that a coating film composition was applied in a thickness of 400 µm.

### Inventive Example 5

A coated metal plate was manufactured in the same manner as the coated metal plate of Inventive Example 1, except that 1 g of silica was added to have a weight ratio between a foaming capsule and silica of 1:1.

### Inventive Example 6

A coated metal plate was manufactured in the same manner as the coated metal plate of Inventive Example 1, except that 2 g of silica was added to have a weight ratio between a foaming capsule and silica of 1:2.

### Inventive Example 7

A coated metal plate was manufactured in the same manner as the coated metal plate of Inventive Example 1, except that 3 g of silica was added to have a weight ratio between a foaming capsule and silica of 1:3.

### Inventive Example 8

A coated metal plate was manufactured in the same manner as the coated metal plate of Inventive Example 1, except that 10 g of silica was added to have a weight ratio between a foaming capsule and silica of 1:10.

### Comparative Example 1

A galvanized steel plate having a size of 20 x 20 cm was prepared.

### Comparative Example 2

In Comparative Example 2, a general color-coated steel plate (from Posco STEELEON), which had a size of 20 x 20 cm and was commercially mass-produced, was used, and was a color-coated steel plate of which a composition of a coating film is formed of a 1 µm pretreatment layer, a 5 µm primer layer formed of a polyester resin, and a 20 µm color-coated layer formed of a polyester resin.

### Comparative Example 3

A coated metal plate was manufactured in the same manner as the coated metal plate of Inventive Example 1, except that 11 g of silica was added to have a weight ratio between a foaming capsule and silica of 1:11.

### 2. Evaluation Criteria for Characteristics of Coated Metal Plate

For Inventive Examples 1 to 4 and Comparative Examples 1 and 2, coating film characteristics were evaluated according to a coating thickness, and for Inventive Examples 1, 5 to 8 and Comparative Example 3, coating film characteristics were evaluated according to an amount ratio between a foaming agent and silica. Evaluation criteria were as follows.

### (1) Corrosion Resistance

Corrosion resistance was evaluated by spraying 5% salt water on an evaluation specimen at a temperature of 35°C and measuring a surface area of a corroded portion relative to an entire surface area of a coated metal plate after 720 hours, to evaluate a degree of corrosion.
**[Poor]:** After 720 hours, 5% or more of the entire surface area of the coated metal plate was corroded.
**[Good]:** After 720 hours, less than 5% of the entire surface area of the coated metal plate was corroded.

### (2) Dew Condensation Prevention

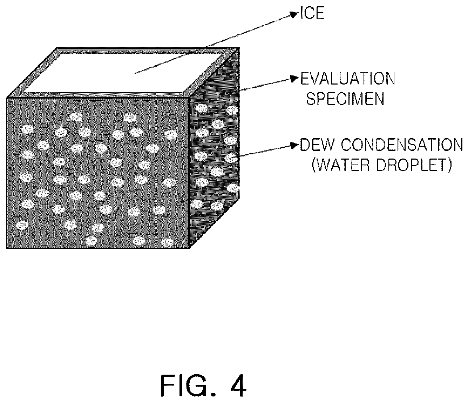

Evaluation of dew condensation prevention was performed by manufacturing a box using coated metal plates manufactured according to Inventive examples and Comparative Examples of the present disclosure, as schematically illustrated in FIG. 4, filling the box with ice, and evaluating the presence or absence of water droplets formed on an outer surface thereof. Specifically, a box having a size of 200 mm (W) x 200 mm (D) x 200 mm (H) was manufactured using coated metal plates manufactured according to Inventive examples and Comparative Examples. After filling the box with ice and leaving the same under an environment of room temperature (25°C) and relative humidity of 50% for 30 minutes, the presence or absence of water droplets on a surface of the box was evaluated.
**[Poor]:** Water droplets formed on the entire surface of the box
**[Fair]:** Water droplets formed on a portion of the surface of the box
**[Good]:** No water droplets formed on the entire surface of the box

### (3) Insulation

Insulation evaluation may be determined by a guarded hot plate method. A coated metal plate may be placed between a hot plate and a cold plate, and heat flowing from a top surface to a back surface of a steel plate may be measured for 1 hour. The lower the amount of heat flow, i.e. the lower the thermal conductivity, the better the insulation performance.

### (4) Emissivity

Emissivity evaluation was conducted by the Korea Construction Living Environment Testing and Research Institute in accordance with the KS standard (KS L 2514), which may be the measurement test regulation for emissivity, and emissivity of a steel plate was measured in an infrared wavelength range of 5 to 20 µm.

### (5) Foaming

Foaming by a foaming capsule included in a coating film composition may be checked by checking the presence of unfoamed portions per 1 cm² when visually examining a surface of a coated film with a 15x magnifying glass after a foaming process.
**[Poor]:** Unfoamed portions of 10% or more exist on the coated surface (10% ≤ unfoamed portion area)
**[Fair]:** Unfoamed portions of less than 10% exist on the coated surface (0% < unfoamed portion area < 10%)
**[Good]:** No unfoamed portions exist on the coated surface (unfoamed portion area 0%).

### (6) Coated Film Hardness

Coated film hardness was measured by observing scratch marks left on a coated film after rubbing a cured coated film with a fingernail in a direction, identical to a coating direction, and in a direction, perpendicular to the coating direction, 20 times. Observation results were evaluated using the following method.
**[Good]:** No marks appeared
**[Fair]:** Marks appeared, but restored and disappeared within 60 seconds
**[Poor]:** Marks appeared

### (7) Coating Processability

Coating processability was evaluated based on whether cracks occurred on an entire area of a processed coated film after a coated film was bent 180°.
**[Poor]:** Cracks occurred in the coated film
**[Good]:** No cracks occurred in the coated film

### 3. Results of Evaluation of Characteristics of Coated Metal Plate

### (1) Results of Evaluation of Characteristics of Coated Metal Plate according to Coating Thickness

Evaluation of characteristics of a coated metal plate according to a coating thickness was performed on Inventive Examples 1 to 4 and Comparative Examples 1 and 2.

### 1) Results of Evaluation of Corrosion Resistance

Results of evaluation of corrosion resistance were as illustrated in Table 1 below.

**[Table 1]**

| | Comparative Ex. 1 (Galvanized Steel Plate) | Comparative Ex. 2 (Coated Steel Plate) | Inventive Ex. 1 (Coated Film 50um) | Inventive Ex. 2 (Coated Film 100um) | Inventive Ex. 3 (Coated Film 200um) | Inventive Ex. 4 (Coated Film 400um) |
|---|---|---|---|---|---|---|
| Corrosion Resistance | 100% corroded Poor | 10% corroded Poor | 0% Good | 0% Good | 0% Good | 0% Good |

As the results of evaluation of corrosion resistance, 100% of the entire surface area of the metal plate was corroded in Comparative Example 1, 10% of the entire surface area of the metal plate was corroded in Comparative Example 2, while 0% of the entire surface area of the metal plate was corroded in Inventive Examples 1 to 4 of the present disclosure. Through the results, it was confirmed that corrosion resistance of the coated metal plate of the present disclosure was excellent.

### 2) Results of Evaluation of Dew Condensation Prevention

Results of evaluation of dew condensation prevention were as illustrated in Table 2 below.

**[Table 2]**

| | Comparative Ex. 1 (Galvanized Steel Plate) | Comparative Ex. 2 (Coated Steel Plate) | Inventive Ex. 1 (Coated Film 50um) | Inventive Ex. 2 (Coated Film 100um) | Inventive Ex. 3 (Coated Film 200um) | Inventive Ex. 4 (Coated Film 400um) |
|---|---|---|---|---|---|---|
| Dew Condensation Prevention | Poor | Poor | Good | Good | Good | Good |

As the results of evaluation of dew condensation prevention, dew condensation was observed on the front surface of the box formed of the coated metal plate in Comparative Examples 1 and 2, but no water droplets formed on the front surface of the box in Inventive Examples 1 to 4. Through the results below, it was confirmed that the dew condensation prevention of the coated metal plate of the present disclosure was also excellent.

### 3) Results of Evaluation of Insulation

Results of evaluation of insulation were as illustrated in Table 3 below.

**[Table 3]**

| | Comparative Ex. 1 (Galvanized Steel Plate) | Comparative Ex. 2 (Coated Steel Plate) | Inventive Ex. 1 (Coated Film 50um) | Inventive Ex. 2 (Coated Film 100um) | Inventive Ex. 3 (Coated Film 200um) | Inventive Ex. 4 (Coated Film 400um) |
|---|---|---|---|---|---|---|
| Thermal Conductivity (W/mK) | 44 | 40 | 2 | 0.5 | 0.2 | 0.2 |

As the results of evaluation of insulation, the metal plates of Comparative Examples 1 and 2 were found to have a thermal conductivity of 40 W/mK or higher, while Inventive Examples 1 to 4 of the present disclosure were found to have a thermal conductivity of 2 W/mK or lower. Through the results above, it was confirmed that insulation performance of the coated metal plate of the present disclosure was excellent.

### 4) Evaluation of Emissivity

Results of evaluation of emissivity were as illustrated in Table 4 below.

**[Table 4]**

| | Comparative Ex. 1 (Galvanized Steel Plate) | Comparative Ex. 2 (Coated Steel Plate) | Inventive Ex. 1 (Coated Film 50um) | Inventive Ex. 2 (Coated Film 100um) | Inventive Ex. 3 (Coated Film 200um) | Inventive Ex. 4 (Coated Film 400um) |
|---|---|---|---|---|---|---|
| Emissivity | 0.55 | 0.80 | 0.90 | 0.93 | 0.93 | 0.93 |

As the results of evaluation of emissivity, Comparative Example 1 was 0.55, Comparative Example 2 was 0.80, while Inventive Examples 1 to 4 of the present disclosure all showed high emissivity of 0.90 or higher. Through the results above, it was confirmed that emissivity of the coated metal plate of the present disclosure was excellent.

### (2) Results of Evaluation of Characteristics of Coated Metal Plate according to Amount Ratio between Foaming Agent and Silica

Evaluation of characteristics of the coated films according to an amount ratio between the foaming agent and the silica was performed for Inventive Examples 1, 5 to 8 and Comparative Example 3.

Results of evaluation were as illustrated in Table 5 below.

**[Table 5]**

| | **Inventive Ex. 5** | **Inventive Ex. 6** | **Inventive Ex. 7** | **Inventive Ex. 1** | **Inventive Ex. 8** | **Comparative Ex. 3** |
|---|---|---|---|---|---|---|
| Foaming Agent:Silica Weight Ratio | 1:1 | 1:2 | 1:3 | 1: 5 | 1:10 | 1:11 |
| Corrosion Resistance | 0% | 0% | 0% | 0% | 0% | 0% |
| Dew Condensation Prevention | Good | Good | Good | Good | Fair | Fair |
| Thermal Conductivity (W/mK) | 2 | 2 | 2 | 2 | 4 | 5 |
| Emissivity | 0.83 | 0.86 | 0.87 | 0.90 | 0.92 | 0.93 |
| Coated Film Foaming | Good | Good | Good | Good | Fair | Poor |
| Coated Film Hardness | Fair | Good | Good | Good | Good | Good |
| Coated Film Processability | Good | Good | Good | Good | Good | Poor |

As the results of evaluation of characteristics of the coated films according to an amount ratio between the foaming agent and the silica, in Comparative Example 3 in which a foaming agent:silica ratio was 1:11, brittleness of the coated film increased due to an excessive amount of silica included in the coating film composition, which caused cracks, and also formation of closed pores was limited by the silica, such that formation of closed pores by the foaming capsules was not performed on an area of 10% or more per 1 cm² of the coating surface. On the other hand, in Inventive Examples 1, 5 to 8 of the present disclosure in which a foaming agent:silica ratio was 1:1 to 1:10, it was measured that the coating properties had excellent corrosion resistance, anti-dew condensation properties, and low thermal conductivity due to normally formed closed pores, and had coated film hardness with fair or higher and coated film processability with good.

## Claims

1. A coating film composition comprising:
a polymer resin; a foaming capsule; a plasticizer; and silica,
wherein the coating film composition includes 0.1 to 10 parts by weight of the foaming capsule; 5 to 40 parts by weight of the plasticizer; and 1 to 10 parts by weight of the silica, based on 100 parts by weight of the polymer resin,
wherein, in the foaming capsule, a foaming agent is included in a thermoplastic plastic cell structure, and
a weight ratio between the foaming capsule and the silica is 1:1 to 1:10.

2. The coating film composition of claim 1, wherein the polymer resin is a polyvinyl chloride resin or a polyurethane resin.

3. The coating film composition of claim 1, wherein the plasticizer is at least one selected from the group consisting of bis-2-propylheptyl phthalate (DPHP), bis-2-ethylhexyl adipate (DEHA), dimethyl adipate (DMAD), monomethyl adipate (MMAD), dioctyl adipate (DOA), dibutyl sebacate (DBS), dibutyl maleate (DBM), diisobutyl maleate (DIBM), and trimethyl tentanyl diisobutyrate.

4. The coating film composition of claim 1, wherein the foaming capsule has an average particle diameter of 1 to 20 µm.

5. The coating film composition of claim 1, further comprising at least one additive selected from the group consisting of a pigment, a surfactant, an anti-bacterial agent, an anti-fungal agent, a matting agent, an anti-foaming agent, a thickener, an anti-settling agent, a leveling agent, a dispersant, a heat stabilizer, a wax component, and an ultraviolet absorber.

6. A coated metal plate comprising:
a base metal plate; and
an anti-dew condensation layer on at least one surface of the base metal plate,
wherein the anti-dew condensation layer includes a porous coating layer and a pretreatment layer disposed between the base metal plate and the porous coating layer, and
wherein the porous coating layer includes the coating film composition of any one of claims 1 to 5, and closed pores.

7. The coated metal plate of claim 6, wherein the base metal plate is selected from the group consisting of a cold-rolled steel plate, a hot-rolled steel plate, a galvanized steel plate, a zinc alloy-plated steel plate, an aluminum plate, and a stainless steel plate.

8. The coated metal plate of claim 6, wherein a thickness of the base metal plate is 0.25 mm to 4.5 mm.

9. The coated metal plate of claim 6, wherein the pretreatment layer is formed by applying a composition including at least one selected from the group consisting of an acrylic resin, an epoxy resin, a phenol resin, a xylene resin, a polyester resin, and a urethane resin to at least one surface of the base metal plate.

10. The coated metal plate of claim 6, wherein a thickness of the pretreatment layer is 0.1 to 1 µm.

11. The coated metal plate of claim 6, wherein an average particle diameter of the closed pores of 5 to 50 µm.

12. The coated metal plate of claim 6, wherein a thickness of the porous coating layer is 50 to 400 µm.
